Europäisches Patentamt

European Patent Office

Office européen des brevets

(19)

(11) Numéro de publication : **0 196 974**
**B1**

(12) # FASCICULE DE BREVET EUROPÉEN

(45) Date de publication du fascicule du brevet :
28.09.88

(21) Numéro de dépôt : 86400692.9

(22) Date de dépôt : 28.03.86

(51) Int. Cl.⁴ : **F 16 B 43/00**, F 16 B 33/00,
A 47 K 1/14

(54) **Dispositif de montage d'une chaînette à boules.**

(30) Priorité : 29.03.85 FR 8504761

(43) Date de publication de la demande :
08.10.86 Bulletin 86/41

(45) Mention de la délivrance du brevet :
28.09.88 Bulletin 88/39

(84) Etats contractants désignés :
DE GB IT

(56) Documents cités :
DE-B- 1 070 450
GB-A- 468 700
US-A- 1 368 473
US-A- 4 240 621

(73) Titulaire : VALENTIN S.A.
F-80130 Bourseville (FR)

(72) Inventeur : Cahon, Hervé
9, rue de Tully
F-80130 Bourseville (FR)

(74) Mandataire : Boutin, Antoine et al
CABINET PIERRE LOYER 77, rue Boissière
F-75116 Paris (FR)

EP 0 196 974 B1

## Description

L'invention concerne le dispositif de montage d'une chaînette dite « chaînette à boules », habituellement utilisée sur les bondes d'éviers, baignoires et autres appareils sanitaires.

Les chaînettes de ce type sont constituées d'une succession de petites boules généralement en acier, solidarisées entre elles par des sections de fil de laiton qui les traversent diamétralement.

Les extrémités de ces chaînettes sont passées dans des attaches appelées graines d'attaches, elles-mêmes montées sur des maillons généralement triangulaires, ouverts à leur base, destinés à venir s'attacher dans des trous de fixation, d'un côté sur une protubérance centrale de la bonde proprement dite et, de l'autre, à la borne supérieure du boulon de fixation de l'ensemble sur l'appareil auquel il est destiné.

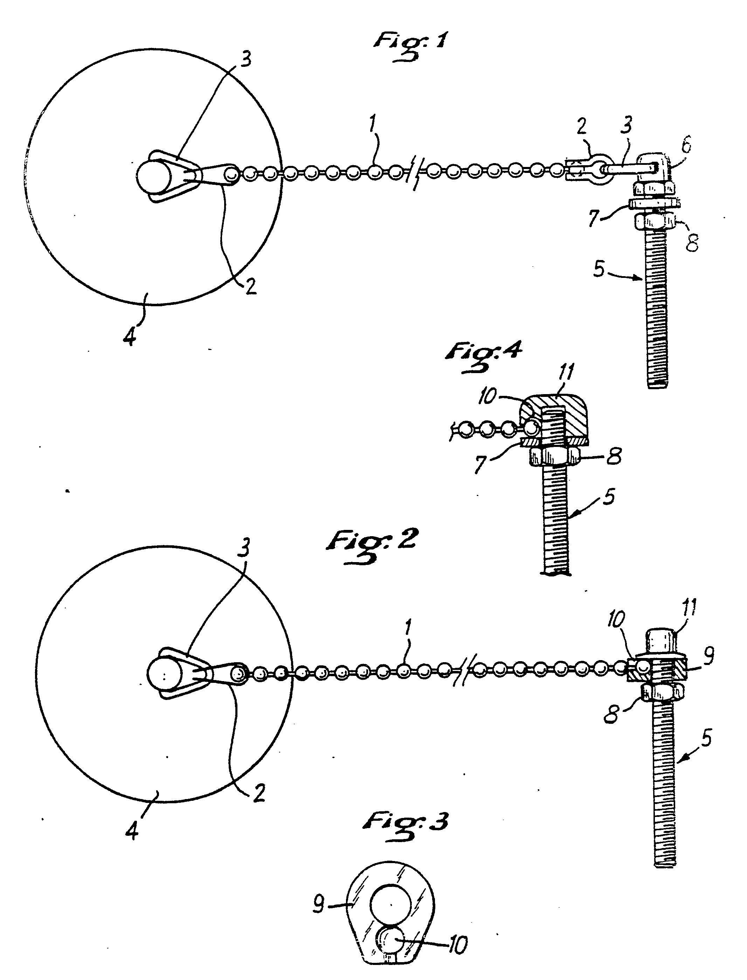

Sur la figure 1, est représenté, en perspective, un dispositif de type connu, tel que décrit ci-dessus, dans lequel 1 est la chaînette à boules, 2 les graines d'attaches, 3 les triangles de fixation, 4 la bonde, 5 le boulon de fixation avec sa borne 6, sa rondelle d'étanchéité 7 et son écrou 8.

La présente invention vise plus particulièrement le montage de la chaînette 1, sur son boulon 5 de fixation.

Actuellement, ce montage nécessite plusieurs opérations complexes, réalisées à la main : passage de la boule d'une extrémité de la chaînette 1 dans l'ouverture d'une graine d'attache 2, repliage de la graine d'attache 2, passage du maillon 3 triangulaire dans les trous de la graine d'attache 2 et serrage du maillon 3 sur la borne 6 du boulon 5.

Il en résulte que le coût de montage est très onéreux par rapport au coût unitaire de l'ensemble. On a tenté de mécaniser ce montage, mais jusqu'à présent, sans succès.

L'invention a donc pour but des moyens de montage simplifiés de la chaînette 1 sur le boulon 5.

A cet effet, selon l'invention, on interpose entre la tête du boulon et son écrou, une bague dans la face supérieure de laquelle un évidement reçoit la boule terminale d'une chaînette à boules et la section de fil reliant ladite boule à celle qui lui est immédiatement adjacente, la base de la tête du boulon venant fermer, au moins partiellement, ledit évidement.

Ainsi, il suffit, lors du montage, de placer l'extrémité de la chaînette dans l'évidement de la bague, d'enfiler cette bague sur la tige du boulon, puis de serrer l'ensemble avec l'écrou pour que la chaînette soit fixée au boulon. Ce montage peut s'effectuer sans perte de temps lors de la pose de la bonde sur l'appareil auquel elle est destinée et n'a donc plus à être effectué en usine, lors de l'assemblage de la chaîne sur la bonde, comme auparavant.

Selon une caractéristique préférentielle de l'invention, la bague recevant l'extrémité de la chaînette est réalisée dans un matériau lui permettant d'exercer en même temps la fonction de rondelle d'étanchéité.

D'autres caractéristiques et avantages de l'invention ressortiront de la description ci-après d'un exemple non limitatif de réalisation de l'invention, représenté sur les figures 2 et 3, qui sont respectivement : une vue en perspective, avec arrachage partiel, du dispositif selon l'invention (figure 2) et une vue en plan de la bague d'attache de la chaînette (figure 3).

Dans cet exemple de réalisation, les éléments identiques à ceux de la figure 1 conservent les mêmes chiffres de référence, 9 est la bague dans l'épaisseur de laquelle est ménagé un évidement radial 10, dont le contour épouse celui d'une boule et d'une section de fil de liaison de la chaînette.

Dans l'exemple de réalisation représenté, la tête 11 du boulon 5 est du type connu sous le nom de borne et peut, en coopération avec une protubérance tubulaire centrale ménagée sous la bonde 1, servir de support à ladite bonde lorsque cette dernière n'est pas en service.

Selon une variante de réalisation, du fait que selon l'invention les graines d'attache et les maillons sont supprimés, on peut également utiliser n'importe quel type de boulon, à partir du moment où la base de sa tête est suffisamment large pour masquer, au moins partiellement, l'évidement de la bague d'attache de la chaînette en service.

Selon un autre mode de réalisation de l'invention, représenté en coupe sur la figure 4, au lieu d'être pratiqué dans une bague 9, l'évidement 10 est directement pratiqué dans la base de la tête 11 du boulon 5.

La tête 11 du boulon 5 peut être, soit d'un seul bloc, soit montée amovible par vissage sur la tige.

Selon une première variante, la tête 11 est métallique et l'on interpose entre celle-ci et la surface de l'appareil une rondelle d'étanchéité 7.

Selon une seconde variante, la tête 11 est en matière plastique propre à réaliser l'étanchéité, ce qui évite l'interposition d'une rondelle 7.

La présente invention concerne un dispositif tel que décrit ci-dessus et comportant les caractéristiques des revendications.

## Revendications

1. Dispositif de montage de l'extrémité d'une chaînette à boules sur un boulon de fixation muni d'une tête de boulon, caractérisé en ce qu'il est constitué par une bague rapportée (9) munie d'un évidement (10) reproduisant la forme d'une boule de la chaînette (1) et d'une section du fil de liaison, ledit évidement étant obturé par la tête (11) de boulon (5) vissée sur ledit boulon.

2. Dispositif de montage de l'extrémité d'une chaînette à boules sur un boulon de fixation muni d'une tête de boulon, caractérisé en ce qu'il est constitué par un évidement (10) pratiqué à la base de la tête (11) du boulon (5) ; cet évidement reproduisant la forme d'une boule de la chaînette (1) et d'une section du fil de liaison, ledit évidement étant obturé par la surface contre laquelle la base de la tête (11) du boulon (5) vient prendre appui lorsqu'elle est vissée sur ledit boulon.

3. Dispositif selon la revendication 1 ou 2, caractérisé en ce que l'évidement (10) est disposé radialement dans la bague ou dans la tête de boulon.

4. Dispositif selon l'une quelconque des revendications 1 à 3, dans lequel l'évidement (10) est pratiqué dans une bague (9), caractérisé en ce que ladite bague fait également fonction de rondelle d'étanchéité.

5. Dispositif selon la revendication 2, caractérisé en ce que la tête (11) du boulon (5) est réalisée dans une matière plastique assurant l'étanchéité du montage.

## Claims

1. A device for mounting the end of a small ball chain on a fixing bolt provided with a bolt head, characterised in that it is constituted by a detachable ring (9) provided with a cavity (10) reproducing the shape of a ball of the chain (1) and of a section of the connecting wire, said cavity being blocked by the head (11) of the bolt (5) screwed on to said bolt.

2. A device for mounting the end of a small ball chain on a fixing bolt provided with a bolt head, characterised in that it is constituted by a cavity (10) formed in the base of the head (11) of the bolt (5) ; said cavity reproducing the shape of a ball of the chain (1) and of a section of the connecting wire, said cavity being blocked by the surface against which the base of the head (11) of the bolt (5) comes to bear when it is screwed on to said bolt.

3. A device according to Claim 1 or Claim 2, characterised in that the cavity (10) is disposed radially in the ring or in the head of the bolt.

4. A device according to any one of Claims 1 to 3, in which the cavity (10) is formed in a ring (9), characterised in that said ring also acts as a sealing washer.

5. A device according to Claim 2, characterised in that the head (11) of the bolt (5) is made of a plastic material ensuring the sealing of the assembly.

## Patentansprüche

1. Vorrichtung zur Montage eines Kugelkettenendes an einem Befestigungsbolzen mit einem Bolzenkopf, dadurch gekennzeichnet, daß diese Vorrichtung aus einem aufgesetzten Ring (9) mit einer Aussparung (10) in Form eines Kugelglieds der Kette (1) und des Querschnitts des Verbindungsdrahts besteht, wobei die Aussparung durch den auf den Bolzen (5) aufgeschraubten Bolzenkopf (11) verschlossen wird.

2. Vorrichtung zur Montage eines Kugelkettenendes an einem Befestigungsbolzen mit einem Bolzenkopf, dadurch gekennzeichnet, daß sie eine Aussparung (10) an der Basis des Bolzenkopfs (11) des Bolzens (5) aufweist, daß diese Aussparung die Form eines Kugelglieds der Kugelkette (1) und des Verbindungsdrahtquerschnitts besitzt und durch die Fläche verschlossen wird, die beim Aufschrauben des Bolzenkopfs auf den besagten Bolzen als Auflage für die Basis des Bolzenkopfs (11) des Bolzens (5) dient.

3. Vorrichtung nach Anspruch 1 oder 2, dadurch gekennzeichnet, daß die Aussparung (10) im Ring bzw. Bolzenkopf radial angebracht ist.

4. Vorrichtung nach Anspruch 1-3, in der die Aussparung (10) in einem Ring (9) angebracht ist, dadurch gekennzeichnet, daß dieser Ring gleichzeitig als Dichtungsring dient.

5. Vorrichtung nach Anspruch 2, dadurch gekennzeichnet, daß der Bolzenkopf (11) des Bolzens (5) aus einem Kunststoff zur Gewährleistung der Montagedichtigkeit besteht.

0 196 974

*Fig: 1*

*Fig: 4*

*Fig: 2*

*Fig: 3*

1